# DEMANDE DE BREVET EUROPEEN

(11) **EP 4 671 595 A1**
(43) Date de publication de la demande: **31.12.2025**
(21) Numéro de dépôt: 25181579.1
(22) Date de dépôt: 09.06.2025
(51) Int. Cl.: F16M 11/04, F16M 13/02, B64D 43/00, B64D 13/00

(54) **ASSEMBLAGE COMPRENANT UN SUPPORT ET UN ÉCRAN RELIÉ AU SUPPORT PAR AU MOINS UN SYSTÈME DE LIAISON PAR EMMANCHEMENT, AÉRONEF COMPORTANT AU MOINS UN TEL ASSEMBLAGE**

(30) Priorité: 25.06.2024 FR 2406792
(71) Demandeur: AIRBUS OPERATIONS (S.A.S.), 31060 Toulouse (FR)
(72) Inventeur: PELLIZZON, Sébastien, 31060 TOULOUSE (FR)
(74) Mandataire: Fantin, Laurent

(57) **Abrégé**

L'invention a pour objet un assemblage (30) comprenant au moins un support (32) qui présente au moins un conduit d'évacuation (42), au moins un écran (34) qui présente une zone intérieure (ZI) ainsi qu'au moins un système de liaison (52) par emmanchement, reliant l'écran (34) et le support (32), qui comporte un logement (46) communiquant avec le conduit d'évacuation (42), un conduit d'échappement (44) communiquant avec la zone intérieure (ZI) et configuré pour être introduit dans le logement (46) selon une direction d'insertion (DI) ainsi qu'au moins un joint annulaire (50) intercalé entre les première et deuxième faces latérales (F46, F44) sensiblement parallèles entre elles et à la direction d'insertion (DI) lorsque l'écran (34) est relié au support (32), le joint annulaire (50) étant comprimé entre le logement (46) et le conduit d'échappement (44) lorsque l'écran (34) est relié au support (32).

## Description

La présente demande se rapporte à un assemblage d'un support et d'un écran relié au support par au moins un système de liaison par emmanchement ainsi qu'à un aéronef comportant au moins tel assemblage.

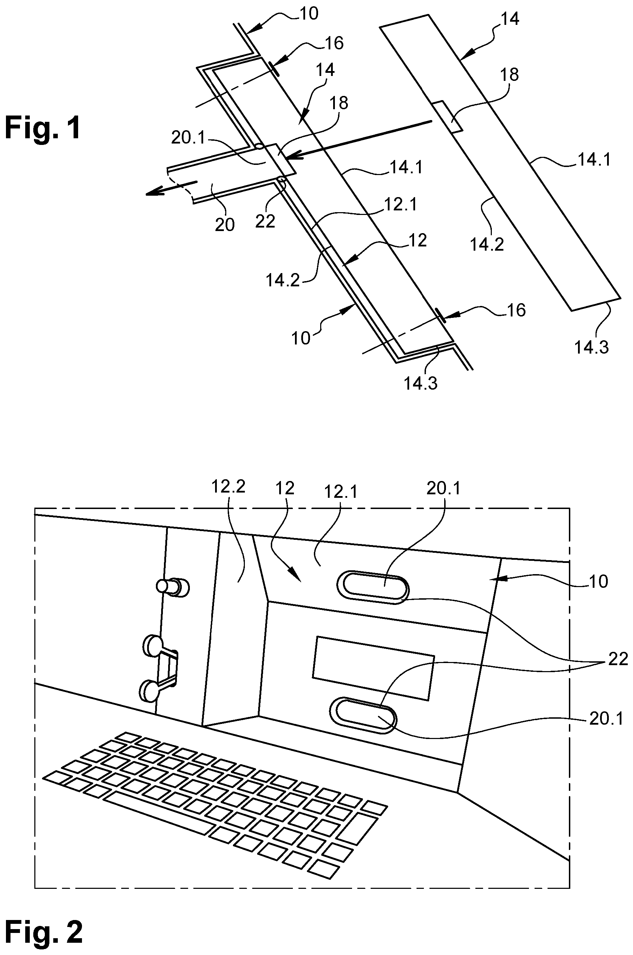

Selon un mode de réalisation de l'art antérieur visible sur les figures 1 et 2, une cabine de pilotage d'un aéronef comprend au moins un support 10, comme un tableau de bord, qui présente un logement 12 configuré pour loger un écran 14.

Selon une configuration, l'écran 14 comprend une face avant 14.1, une face arrière 14.2 orientée vers le support 10 ainsi qu'un chant 14.3 reliant les faces avant et arrière 14.1, 14.2 et décrivant généralement un rectangle. En complément, le logement 12 comprend un fond 12.1 ainsi que des parois latérales 12.2 qui épousent respectivement la face arrière 14.2 et le chant 14.3 de l'écran 14. Des éléments de fixation 16 sont prévus pour fixer l'écran 14 sur le support 10.

L'écran 14 comprend généralement au moins un orifice de ventilation 18 pour évacuer la chaleur produite par l'écran 14 en fonctionnement. Cet orifice de ventilation 18 débouche de manière affleurante au niveau de la face arrière 14.2 de l'écran 14.

En complément, le support 10 comprend, pour chaque orifice de ventilation 18, un conduit d'évacuation 20 qui présente une embouchure 20.1 au niveau du fond 12.1 du logement 12 ainsi qu'un joint d'étanchéité 22 annulaire solidaire du fond 12.1 du logement 12 et positionné autour de l'embouchure 20.1. Lorsque l'écran 14 est fixé sur le support 10, l'embouchure 20.1 du conduit d'évacuation 20 est positionnée face à l'orifice de ventilation 18.

En fonctionnement, le joint d'étanchéité 22 doit être comprimé entre le fond 12.1 du logement 12 et la face arrière 14.2 de l'écran 14 pour assurer une étanchéité entre l'écran 14 et le support 10. Dans la mesure où le joint d'étanchéité 22 n'est pas visible lorsque l'écran 14 est fixé sur le support 10, il est difficile de contrôler s'il est correctement comprimé et assure une bonne étanchéité. De plus, la compression du joint d'étanchéité 22 dépend du serrage des éléments de fixation 16.

Selon un autre inconvénient, les étapes de montage et démontage de ces éléments de fixation 16 (nécessaires pour la fixation de l'écran 14 sur le support et la compression du joint d'étanchéité) nécessitent du temps. La présence de ces éléments de fixation 16 conduit également à augmenter la masse embarquée. Les risques de perte de ces éléments de fixation 16 lors des opérations de montage et démontage sont relativement importants.

La présente invention vise à remédier à tout ou partie des inconvénients de l'art antérieur.

A cet effet, l'invention a pour objet un assemblage comprenant au moins un support qui présente au moins un conduit d'évacuation, au moins un écran qui présente une zone intérieure ainsi qu'au moins un système de liaison reliant l'écran et le support, la zone intérieure communiquant avec le conduit d'évacuation lorsque l'écran est relié au support.

Selon l'invention, le système de liaison est un système de liaison par emmanchement et comporte :
a. un logement présentant une première face latérale et communiquant avec un premier élément parmi le conduit d'évacuation du support et la zone intérieure de l'écran,
b. un conduit d'échappement, configuré pour être introduit dans le logement selon une direction d'insertion, présentant une deuxième face latérale et communiquant avec un deuxième élément différent du premier élément parmi le conduit d'évacuation du support et la zone intérieure de l'écran,
c. au moins un joint annulaire intercalé entre les première et deuxième faces latérales sensiblement parallèles entre elles et à la direction d'insertion lorsque l'écran est relié au support,
d. le joint annulaire, le logement et le conduit d'échappement étant configurés de manière à ce que le joint annulaire soit comprimé entre le logement et le conduit d'échappement lorsque l'écran est relié au support.

Le joint annulaire étant positionné entre des première et deuxième faces latérales parallèles à une direction d'insertion du conduit dans le logement, il est nécessairement comprimé entre les première et deuxième faces latérales lorsque l'écran est relié au support, ce qui contribue à obtenir dans tous les cas une étanchéité optimale. Le conduit d'échappement étant emmanché en force dans le logement en raison de la compression du joint annulaire, l'écran est relié au support, les frottements entre le joint annulaire et la première ou deuxième face latérale empêchant la sortie du conduit d'échappement du logement.

Selon une autre caractéristique, le conduit d'échappement est légèrement conique.

Selon une autre caractéristique, le joint annulaire est solidaire du logement.

Selon une autre caractéristique, le logement comprend une gorge annulaire, au niveau de la première face latérale, configurée pour loger le joint annulaire.

Selon une autre caractéristique, le logement comprend une embouchure via laquelle est introduit le conduit d'échappement, le joint annulaire étant distant de l'embouchure lorsque l'écran est relié au support.

Selon une autre caractéristique, le conduit d'échappement et le logement présentent respectivement une section transversale extérieure et une section transversale intérieure non circulaires qui coopèrent entre elles.

Selon une autre caractéristique, le logement et le conduit d'échappement sont respectivement solidaires du support et de l'écran.

Selon une autre caractéristique, l'assemblage comprend un manchon relié de manière étanche au conduit d'évacuation, le manchon présentant une zone intérieure qui forme le logement et une face intérieure qui correspond à la première face latérale.

Selon une autre caractéristique, le logement et le conduit d'échappement sont respectivement solidaires de l'écran et du support.

L'invention a également pour objet un aéronef comprenant au moins un assemblage selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une coupe schématique d'un écran fixé sur un support illustrant un mode de réalisation de l'art antérieur,
- La figure 2 est une vue en perspective d'un support sans écran illustrant un mode de réalisation de l'art antérieur,
- La figure 3 est une coupe schématique d'un écran monté sur un support illustrant un mode de réalisation de l'invention.

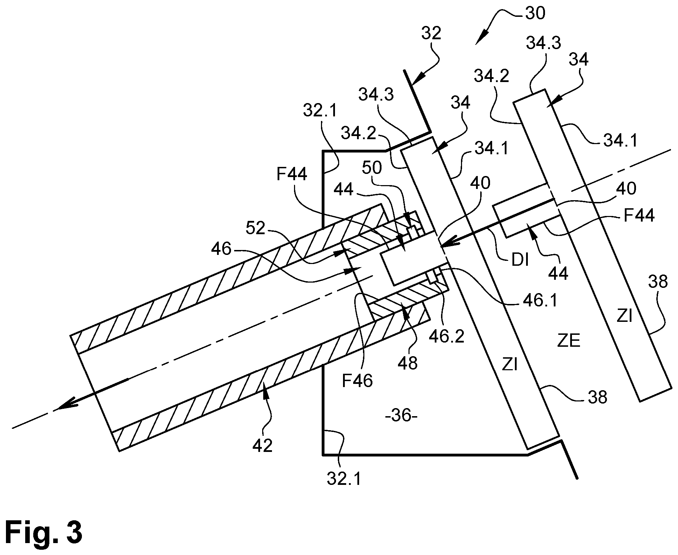

Selon un mode de réalisation visible sur la figure 3, un assemblage 30 comprend au moins un support 32 ainsi qu'au moins un écran 34 positionné contre le support 32 et relié à ce dernier. Selon une application, un aéronef comprend au moins un tel assemblage 30 positionné par exemple dans la cabine de pilotage de l'aéronef.

L'écran 34 comprend une face avant 34.1, une face arrière 34.2 orientée vers le support 32 ainsi qu'au moins un chant 34.3 reliant les faces avant et arrière 34.1, 34.2 et décrivant généralement un rectangle.

Selon une configuration, le support 32 comprend un logement 36 configuré pour recevoir au moins une partie de l'écran 34. Ce logement 36 peut comprendre un fond 32.1 ainsi qu'au moins une paroi latérale qui épousent respectivement la face arrière 34.2 et le chant 34.3 de l'écran 34. En variante, le support 32 peut ne pas comprendre de logement mais une simple face de réception faisant face à la face arrière 34.2 de l'écran 34 lorsque ce dernier est positionné sur le support 32.

L'écran 34 comprend une coque 38 délimitant une zone intérieure ZI et une zone extérieure ZE ainsi qu'au moins un orifice de ventilation 40 prévu pour faire communiquer les zones intérieure et extérieure ZI, ZE et situé au niveau de la face arrière 34.2 de l'écran 34. En complément, le support 32 comprend au moins un conduit d'évacuation 42 configuré pour communiquer avec au moins un orifice de ventilation 40 de l'écran 34 lorsque l'écran 34 est relié au support 32. Selon un agencement, le support 32 comprend un conduit d'évacuation 42 pour chaque orifice de ventilation 40 prévu au niveau de la face arrière 34.2 de l'écran 34. En variante, le support 32 comprend au moins un conduit d'évacuation 42 communiquant avec plusieurs orifices de ventilation 40 d'un même écran 34.

Selon un mode réalisation, l'écran 34 comprend au moins un conduit d'échappement 44 communiquant avec la zone intérieure ZI de l'écran 34 et situé dans le prolongement de l'orifice de ventilation 40, en saillie par rapport à la face arrière 34.2. En complément, le support 32 comprend au moins un logement 46, communiquant avec le conduit d'évacuation 42, configuré pour loger au moins partiellement le conduit d'échappement 44. Le logement 46 présente une face intérieure qui forme une première face latérale F46. En complément, le conduit d'échappement 44 présente une face extérieure qui forme une deuxième face latérale F44.

Le logement 46 présente une embouchure 46.1 via laquelle est introduit le conduit d'échappement 44 selon une direction d'insertion DI.

Le conduit d'échappement 44 est solidaire de la coque 38 et relié de manière étanche avec cette dernière. Selon un mode de réalisation, la coque 38 et le (ou les) conduit(s) d'échappement 44 sont réalisés d'un seul tenant.

Selon un agencement, l'écran 34 comprend un conduit d'échappement 44 pour chaque orifice de ventilation 40.

Selon une configuration visible sur la figure 3, l'assemblage 30 comprend un manchon 48, relié de manière étanche au conduit d'évacuation 42, qui peut être emmanché dans le conduit d'évacuation 42 ou rapporté à l'extérieur de ce dernier. Selon cette configuration, le manchon 48 présente une zone intérieure qui forme le logement 46 et la première face latérale F46 correspond à la face intérieure du manchon 48.

Selon une autre configuration, l'assemblage 30 peut ne pas comprend de manchon 48. Selon cette configuration, le conduit d'évacuation 42 comprend une zone intérieure qui forme le logement 46 et la première face latérale F46 correspond à la face intérieure du conduit d'évacuation 42.

Selon un mode de réalisation, chaque conduit d'échappement 44 présente une section transversale intérieure sensiblement égale à celle de l'orifice de ventilation 40 avec lequel il coopère ainsi qu'une section transversale extérieure inférieure à la section transversale intérieure du logement 46. Selon une configuration, la section transversale extérieure peut être légèrement conique.

En fonctionnement, le conduit d'échappement 44 est introduit dans le logement 46 en suivant la direction d'insertion DI. Lorsque l'écran 34 est relié au support 32, les première et deuxième faces latérales F46 et F44 se font au moins partiellement face et sont sensiblement parallèles entre elles et à la direction d'insertion DI.

L'assemblage 30 comprend, pour au moins un couple de conduit d'échappement 44 et de logement 46, un joint annulaire 50 positionné entre les première et deuxième faces latérales F46, F44 et distant de l'embouchure 46.1 ; le joint annulaire 50, les première et deuxième faces latérales F46, F44 étant configurés de manière à ce que le joint annulaire 50 soit comprimé entre les première et deuxième faces latérales F46, F44 lorsque l'écran 34 est monté sur le support 32 et que le conduit d'échappement 44 est inséré dans le logement 46. Selon un mode de réalisation, le joint annulaire 50 est solidaire du logement 46. Dans ce cas, le conduit d'échappement 44 est emmanché dans le joint annulaire 50. Selon une configuration, le logement 46 comprend une gorge annulaire 46.2, au niveau de la première face latérale F46, configurée pour loger au moins partiellement le joint annulaire 50.

En variante, le joint annulaire 50 pourrait être solidaire du conduit d'échappement 44.

Pour empêcher la rotation de l'écran 34, l'écran 34 comprend plusieurs conduits d'échappement 44 coopérant avec plusieurs logements 46. En variante, l'écran 34 peut ne comprendre qu'un seul conduit d'échappement 44. Dans ce cas, le conduit d'échappement 44 et le logement 46 présentent respectivement une section transversale extérieure et une section transversale intérieure non circulaires, généralement oblongues, qui coopèrent entre elles.

Bien entendu, l'invention n'est pas limitée aux modes de réalisation précédemment décrits. Ainsi, l'écran 34 peut comprendre un logement, en creux par rapport à la face arrière 34.2 de l'écran 34, qui présente un fond au niveau duquel est positionné l'orifice de ventilation 40, ledit logement étant configuré pour recevoir un conduit d'échappement communiquant avec le conduit d'évacuation 42.

Quel que soit le mode de réalisation, l'assemblage 30 comprend au moins un support 32 présentant au moins un conduit d'évacuation 42, au moins un écran 34 présentant une zone intérieure ZI ainsi qu'au moins un système de liaison 52 reliant l'écran 34 et le support 32, la zone intérieure ZI communiquant avec le conduit d'évacuation 42 lorsque l'écran 34 est relié au support 32.

Selon une particularité de l'invention, le système de liaison 52 est un système de liaison par emmanchement et comporte :
- un logement 46 présentant une première face latérale F46 et communiquant avec un premier élément parmi le conduit d'évacuation 42 du support 32 et la zone intérieure ZI de l'écran 34,
- un conduit d'échappement 44 présentant une deuxième face latérale F44 et communiquant avec un deuxième élément différent du premier élément parmi le conduit d'évacuation 42 du support 32 et la zone intérieure ZI de l'écran 34,
- au moins un joint annulaire 50 intercalé entre les première et deuxième faces latérales F46, F44 lorsque l'écran 34 est relié au support 32, les première et deuxième faces latérales F46, F44 étant sensiblement parallèles entre elles et à une direction d'insertion DI du conduit d'échappement 44 dans le logement 46. En complément, le logement 46, le conduit d'échappement 44 et le joint annulaire 50 sont configurés de manière à ce que le joint annulaire 50 soit comprimé entre les première et deuxième faces latérales F46, F44 lorsque l'écran 34 est monté sur le support 32.

Selon un premier mode de réalisation visible sur la figure 3, le logement 46 est solidaire du support 32 et correspond à l'intérieur du conduit d'évacuation 42 ou d'un manchon 48 solidaire du conduit d'évacuation 42, le conduit d'échappement 44 étant solidaire de l'écran 34.

Selon un autre mode de réalisation, le logement est prévu en creux au niveau de la face arrière 34.2 de l'écran 34, le conduit d'échappement étant solidaire du support 32 et communiquant avec le conduit d'évacuation 42.

Quel que soit le mode de réalisation, le joint annulaire 50 étant positionné entre des première et deuxième faces latérales F46, F44 parallèles à une direction d'insertion DI du conduit dans le logement 46, il est nécessairement comprimé entre les première et deuxième faces latérales F46, F44 lorsque l'écran 34 est relié au support 32, ce qui contribue à obtenir dans tous les cas une étanchéité optimale. Par ailleurs, lorsque le conduit d'échappement 44 est emmanché en force dans le logement 46 en raison de la compression du joint annulaire 50, l'écran 34 est relié au support 32, les frottements entre le joint annulaire 50 et la première ou deuxième face latérale F46, F44 empêchant la sortie du conduit d'échappement 44 du logement 46. Enfin, cette solution permet de supprimer les éléments de fixation 16 et de ne pas avoir recours à un outillage pour fixer l'écran 34 sur le support 32.

## Revendications

1. Assemblage (30) comprenant au moins un support (32) qui présente au moins un conduit d'évacuation (42), au moins un écran (34) qui présente une zone intérieure (ZI) ainsi qu'au moins un système de liaison (52) reliant l'écran (34) et le support (32), la zone intérieure (ZI) communiquant avec le conduit d'évacuation (42) lorsque l'écran (34) est relié au support (32) ; **caractérisé en ce que** le système de liaison (52) est un système de liaison par emmanchement et comporte un logement (46) présentant une première face latérale (F46) et communiquant avec un premier élément parmi le conduit d'évacuation (42) du support (32) et la zone intérieure (ZI) de l'écran (34), un conduit d'échappement (44) configuré pour être introduit dans le logement (46) selon une direction d'insertion (DI), présentant une deuxième face latérale (F44) et communiquant avec un deuxième élément différent du premier élément parmi le conduit d'évacuation (42) du support (32) et la zone intérieure (ZI) de l'écran (34), ainsi qu'au moins un joint annulaire (50) intercalé entre les première et deuxième faces latérales (F46, F44) sensiblement parallèles entre elles et à la direction d'insertion (DI) lorsque l'écran (34) est relié au support (32), le joint annulaire (50), le logement (46) et le conduit d'échappement (44) étant configurés de manière à ce que le joint annulaire (50) soit comprimé entre le logement (46) et le conduit d'échappement (44) lorsque l'écran (34) est relié au support (32).

2. Assemblage selon la revendication précédente, **caractérisé en ce que** le conduit d'échappement (44) est légèrement conique.

3. Assemblage selon l'une des revendications précédentes, **caractérisé en ce que** le joint annulaire (50) est solidaire du logement (46).

4. Assemblage selon la revendication précédente, **caractérisé en ce que** le logement (46) comprend une gorge annulaire (46.2), au niveau de la première face latérale (F46), configurée pour loger le joint annulaire (50).

5. Assemblage selon l'une des revendications précédentes, **caractérisé en ce que** le logement (46) comprend une embouchure (46.1) via laquelle est introduit le conduit d'échappement (44) et **en ce que** le joint annulaire (50) est distant de l'embouchure (46.1) lorsque l'écran (34) est relié au support (32).

6. Assemblage selon l'une des revendications précédentes, **caractérisé en ce que** le conduit d'échappement (44) et le logement (46) présentent respectivement une section transversale extérieure et une section transversale intérieure non circulaires qui coopèrent entre elles.

7. Assemblage selon l'une des revendications précédentes, **caractérisé en ce que** le logement (46) et le conduit d'échappement (44) sont respectivement solidaires du support (32) et de l'écran (34).

8. Assemblage selon la revendication précédente, **caractérisé en ce que** l'assemblage comprend un manchon (48) relié de manière étanche au conduit d'évacuation (42), le manchon (48) présentant une zone intérieure qui forme le logement (46) et une face intérieure qui correspond à la première face latérale (F46).

9. Assemblage selon l'une des revendications 1 à 6, **caractérisé en ce que** le logement (46) et le conduit d'échappement (44) sont respectivement solidaires de l'écran (34) et du support (32).

10. Aéronef comprenant au moins un assemblage selon l'une des revendications précédentes.
